# FASCICULE DE BREVET EUROPEEN

(11) **EP 1 184 438 B1**
(45) Date de publication et mention de la délivrance du brevet: **22.10.2003**
(21) Numéro de dépôt: 01402112.5
(22) Date de dépôt: 06.08.2001
(51) Int. Cl.: C09K 5/04

(54) **Composition utilisable comme fluide frigorifique**
Zusammensetzung verwendbar als Kühlflüssigkeit
Composition usable as refrigerant

(30) Priorité: 04.09.2000 FR 0011229
(43) Date de publication de la demande: 06.03.2002
(73) Titulaire: Atofina, 92800 Puteaux (FR)
(72) Inventeur: Caron, Laurent, 92400 Courbevoie (FR); Guilpain, Gérard, 92500 Rueil-Malmaison (FR)
(74) Mandataire: Granet, Pierre

(56) Documents cités:
- EP-A- 0 638 623
- WO-A-94/26835
- US-A- 5 516 446

## Description

La présente invention a pour objet une composition comprenant du pentafluoroéthane, du 1,1,1,2-tétrafluoroéthane et du diméthyléther, son utilisation en réfrigération et/ou conditionnement d'air, ainsi qu'un système de transfert de chaleur la contenant.

Les systèmes de transfert de chaleur incluent notamment les réfrigérateurs, les pompes à chaleur et les systèmes d'air conditionné.

Dans de tels dispositifs, un fluide frigorifique de point d'ébullition convenable est évaporé à basse pression, en prenant de la chaleur dans un premier milieu (ou zone) environnant. La vapeur ainsi formée est alors compressée au moyen d'un compresseur et passe ensuite dans un condenseur dans lequel elle est transformée à l'état liquide en donnant lieu à un dégagement de chaleur dans une deuxième zone environnante. Le liquide ainsi condensé circule ensuite dans un détendeur à la sortie duquel il se transforme en un mélange biphasique de liquide et de vapeur, lequel est enfin introduit dans l'évaporateur où le liquide est de nouveau évaporé à basse pression, ce qui complète le cycle.

L'énergie mécanique requise pour assurer la compression de la vapeur et la circulation du fluide est assurée par un moteur électrique ou à combustion interne. Comme dans tout dispositif mécanique, il est nécessaire que les parties en mouvement soient convenablement lubrifiées. Les lubrifiants utilisés font partie intégrante du système de transfert de chaleur et conditionnent à la fois ses performances et sa durée de vie par le maintien dans le temps d'une lubrification convenable.

En particulier, le fluide frigorifique qui est à chaque passage dans le compresseur en contact avec le lubrifiant présent sur ses parties mobiles, tend à en emporter une certaine quantité, laquelle accompagne le fluide frigorifique dans son cycle et se retrouve donc dans l'évaporateur. Or ce dernier est généralement porté à une basse température, à laquelle la viscosité du lubrifiant est particulièrement élevée, de telle sorte que ce dernier risque de s'accumuler dans l'évaporateur et n'a donc plus la possibilité de revenir vers le compresseur, ce retour étant qualifié dans le présent texte de "retour d'huile".

Ainsi, si le retour d'huile est insuffisant, la quantité de lubrifiant présente sur les parties mobiles du compresseur ne peut être maintenue constante dans le temps, ce qui porte donc atteinte au fonctionnement convenable du dit compresseur et à sa durée de vie.

Il est donc nécessaire d'utiliser un couple fluide frigorifique/huile qui soit parfaitement compatible, notamment en ce qui concerne le retour d'huile.

Le R-22 ou monochlorodifluorométhane est un réfrigérant de type HCFC (HydroChloroFluoroCarbure) largement utilisé dans des applications de transfert de chaleur incluant la climatisation fixe, la réfrigération commerciale et industrielle, ainsi que pour les pompes à chaleur. Il existe actuellement de nombreux systèmes de transfert de chaleur conçus pour le R-22 ; les lubrifiants mis en oeuvre, car adaptés au R-22 notamment en ce qui concerne le retour d'huile, sont soit des huiles minérales soit des huiles alkylbenzène.

Bien que le R-22 ait un potentiel de destruction d'ozone (ci-après ODP) très faible, son utilisation est cependant également l'objet de restriction, et de nouveaux produits à base d'HFC (HydroFluoroCarbures) ont été développés, particulièrement avantageux pour la couche d'ozone stratosphérique, puisque les HFC présentent un ODP nul.

Parmi ces produits, le R-407C a notamment été développé pour remplacer le R-22 dans des applications de conditionnement d'air. Ce produit est un mélange associant les R-32, R-125, R-134a dans les proportions de 23/25/52 % en poids. Le R-32 est la dénomination usuelle dans le métier du difluorométhane, le R-125 est le pentafluoroéthane, et le R-134a désigne le 1,1,1,2-tétrafluoroéthane. Le R-407C possède des propriétés thermodynamiques qui approchent étroitement celles du R-22. De ce fait, le R-407C peut être utilisé dans les anciens systèmes conçus pour fonctionner avec le R-22, permettant ainsi le remplacement d'un fluide HCFC par un fluide HFC plus sûr vis à vis de la couche d'ozone stratosphérique, dans le cadre d'une procédure de conversion de ces anciens systèmes. Les propriétés thermodynamiques concernées sont bien connues de l'homme de l'art et sont notamment la capacité frigorifique, l'efficacité énergétique (ou COP), la pression de condensation, la pression d'évaporation et l'intervalle de distillation (ou glide).

La capacité frigorifique représente la puissance frigorifique disponible grâce au fluide frigorigène, pour un compresseur donné. Pour remplacer le R-22, il est impératif de disposer d'un fluide dont la capacité frigorifique est élevée et proche de celle du R-22.

Le COP exprime le rapport de l'énergie de réfrigération délivrée à l'énergie appliquée au compresseur pour comprimer le fluide frigorifique à l'état de vapeur. Dans le cadre de la substitution du R-22, une valeur du COP du fluide inférieure à celle du R-22 est convenable si l'on accepte d'augmenter la consommation électrique de l'installation.

Enfin la pression de condensation et la pression d'évaporation indiquent la contrainte exercée par le fluide sur les parties mécaniques correspondantes du circuit frigorifique. Un fluide capable de remplacer le R-22 dans un système frigorifique conçu pour ce dernier ne doit pas présenter de pression de condensation et d'évaporation significativement supérieures à celles du R-22.

Sauf exception (azéotrope), les mélanges de fluides ne bouillent pas à une température constante pour une pression donnée, à la différence des corps purs. La différence de température entre le début et la fin de l'ébullition appelée encore glide, conditionne le fonctionnement des échangeurs. Dans le cadre de la substitution du R-22, une valeur du glide faible et voisine de celle du R-407C est souhaitable.

Ces nouveaux produits à base d' HFC, et notamment le R-407C, ne sont cependant pas compatibles avec les huiles minérales ou alkylbenzène utilisées pour les systèmes fonctionnant avec le R-22 en ce qui concerne la lubrification des organes mécaniques, notamment en raison d' un retour d'huile insuffisant. Ils nécessitent ainsi l'utilisation de nouvelles huiles, de type PolyOlEster (POE) ou PolyalkylèneGlycol (PAG).

Le remplacement, dans les nombreux systèmes de transfert de chaleur existants qui ont été conçus pour fonctionner avec du R-22, de ce dernier fluide par un fluide présentant des performances thermodynamiques proches et un potentiel de destruction de l'ozone égale à 0, nécessite donc, outre le remplacement du fluide frigorigène, le changement de l'huile de lubrification, voire des changements de certains composants du circuit frigorifique tels que les joints et tuyaux de connexion. Une telle procédure de conversion est quasiment impossible avec certains matériels de compression largement répandus, tel le compresseur hermétique. Elle est dans tous les cas longue, pénible et coûteuse, d'autant plus que pour éliminer la totalité de l'ancienne huile, plusieurs rinçages avec la nouvelle huile sont nécessaires.

La demande de brevet européen EP 638623 mentionne une composition quasi-azéotropique consistant de 5 à 20% de R-125, de 75 à 90 % de R-134a et de 1 à 5% de diméthyléther (ci-après DME). Cette composition est mentionnée comme étant utilisable en tant que substituant du R-502 qui est un mélange de 48,8 % de R-22 (CHCIF2) et de 51,2 % de R-115 (CCIF2CF3). Elle ne convient toutefois pas à la substitution du R-22, notamment dans le conditionnement d'air.

La présente invention a pour but de remédier à ces divers inconvénients.

Elle a pour objet en premier lieu une composition consistant essentiellement de 55 à 94 % de R-125, de 2,5 à 35 % de R-134a et de 3,5 à 25 % de DME. Une composition consistant essentiellement de 60 à 85 % de R-125, de 10 à 32 % de R-134a, et de 5 à 8 % de DME est préférée. Les pourcentages indiqués dans le présent texte se réfèrent, en l'absence d'autres indications, à des pourcentages en poids.

Cette composition peut se substituer au R-22 dans ses diverses applications, notamment pour le conditionnement d'air. Elle présente de plus avantageusement des performances thermodynamiques qui lui permettent de se substituer sans inconvénient au R-22 dans une installation de transfert de chaleur conçue pour fonctionner avec ce fluide, en permettant notamment un retour d'huile bien supérieur à celui du R-407C lorsque l'huile utilisée est précisément une huile minérale ou une huile alkylbenzène. Il n'est donc pas nécessaire, dans la procédure de conversion d'un matériel existant fonctionnant avec du R-22, de vidanger l'huile, contrairement au cas où l'on remplace le R-22 par le R-407C.

Les compositions spécifiques suivantes sont particulièrement avantageuses :

| | | |
|---|---|---|
| - R-125 : 63,5% | R-134a : 31,5% | DME : 5% |
| - R-125 : 73,5% | R-134a : 21% | DME : 5,5% |
| - R-125 : 82%. | R-134a : 12% | DME : 6%. |

La dernière de ces 3 compositions est encore plus préférée.

La composition selon l'invention est donc utilisable comme fluide frigorifique dans un système de transfert de chaleur adapté au R-22 et comprenant comme lubrifiant une huile minérale ou une huile alkylbenzène. La présente invention a également pour objet cette utilisation. Un système de transfert de chaleur adapté au R-22 comprend un circuit frigorifique dont les éléments mécaniques, notamment l'évaporateur et le condenseur, sont compatibles avec les contraintes résultant de la pression exercée par le R-22 au cours de son cycle frigorifique.

La composition objet de l'invention peut être préparée par des méthodes bien connues de l'homme du métier, telles que par la réalisation d'un mélange de chacun de ses composants à l'état liquide dans les proportions désirées.

Un autre avantage de la composition objet de l'invention est sa compatibilité chimique avec les polymères habituellement utilisés pour réaliser les joints ou tuyaux de connexion des circuits frigorifiques fonctionnant avec le R-22. Ces polymères sont, par exemple, l'EPDM (ter polymère éthylène-propylène), l'Hypalon® (polyéthylène chlorosulfone), le Néoprène® (polychloroprène), le Viton® (copolymère hexafluoropropylène/fluorure /fluorure de vinylidène), le polyamide 6/6 (PA 6/6), le polyéthylène téréphtalate (PET), le polytétrafluoroéthylène (PTFE).

La présente invention a enfin pour objet un système de transfert de chaleur adapté au R-22 et comprenant comme fluide frigorigène la composition telle que définie précédemment.

Le lubrifiant mis en oeuvre dans un tel système est avantageusement une huile minérale ou une huile alkylbenzène.

Les systèmes de transfert de chaleur sont des systèmes frigorifiques, des systèmes de conditionnement d'air ou des pompes à chaleur. Les systèmes de conditionnement d'air sont plus particulièrement préférés.

Les exemples qui suivent sont présentés à titre purement illustratifs de la présente invention et ne sauraient être interprétés pour en réduire la portée.

### Exemples 1-8 :

Diverses compositions selon la présente invention ont été préparées et soumises aux tests suivants.

### a) Retour d'huile :

Une charge de 5 g d'huile minérale est introduite dans un serpentin réfrigéré (1) placé dans un cryostat (2) à 0°C.

Ce serpentin est relié en amont, par l'intermédiaire d'une conduite munie d'une vanne d'arrêt (3) et d'un capteur de pression (4) à une bouteille (5) contenant la composition selon l'invention à tester, équipée d'un tube plongeur et placée dans un bain à 30°C.

Le serpentin est prolongé en aval par une conduite munie d'une vanne de régulation (6) et d'une vanne d'arrêt (7) qui arrive dans la partie inférieure d'une bouteille de récupération (8) placée dans un bain chauffant à 60 °C. Une conduite issue de la partie supérieure de la bouteille de récupération est munie d'un compteur à gaz (9).

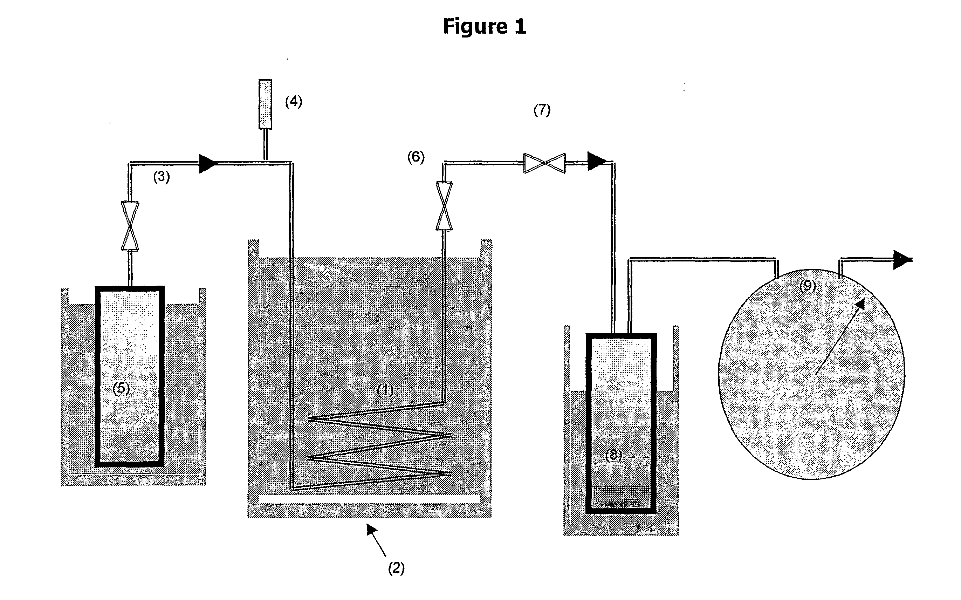

Le circuit décrit sur la **figure 1** est représentatif d'un circuit frigorifique au voisinage de l'évaporateur, et le test de retour d'huile consiste à mesurer la fraction de la charge d'huile placée dans le serpentin qui est emportée par le fluide frigorigène.

On fait circuler pendant 30 minutes, par ouverture initiale de la vanne d'arrêt (7) puis de la vanne d'arrêt (3), un courant de la composition selon l'invention à tester, à raison d'un débit d'environ 1 m3/h à 0°C et sous 1 atmosphère, à travers le circuit décrit précédemment et notamment dans le serpentin contenant la charge d'huile.

A la fin de l'essai, la quantité d'huile récupérée dans la bouteille (8) est pesée.

Le taux de récupération ou "retour d'huile" (exprimé en pourcentage) est égal au poids de l'huile ainsi récupérée divisée par le poids de la charge d'huile placée initialement dans le serpentin.

### b) Performances thermodynamiques :

Les performances de la composition selon l'invention ont été évaluées sur une boucle frigorifique dont les conditions de fonctionnement sont : une température d'évaporation de 0°C, une température à l'aspiration du compresseur de 15°C, une température de condensation de 40°C et un sous-refroidissement du liquide en sortie de condenseur de 5K.

Les teneurs en R-125, R-134a et DME des compositions préparées, ainsi que les résultats obtenus à ces 2 tests, sont rassemblés dans le Tableau 1 ci-après. A titre de référence, les résultats pour le R-22 et le R-407C sont également indiqués.

Il apparaît ainsi que les compositions illustrées ont une capacité frigorifique proche de celle du R-22, tout en ayant un COP qui reste du même ordre de grandeur que celui du R-407C. Elles conviennent par conséquent à une utilisation comme substitut du R-22, dans ses applications en conditionnement d'air et en réfrigération.

Elles offrent de plus un retour d'huile, et donc une compatibilité améliorée avec l'huile minérale utilisée pour le R-22 et présentent des pressions d'évaporation et de condensation inférieures à celles du R-22, ce qui confirme la possibilité de les utiliser pour une reconversion simplifiée d'installation.

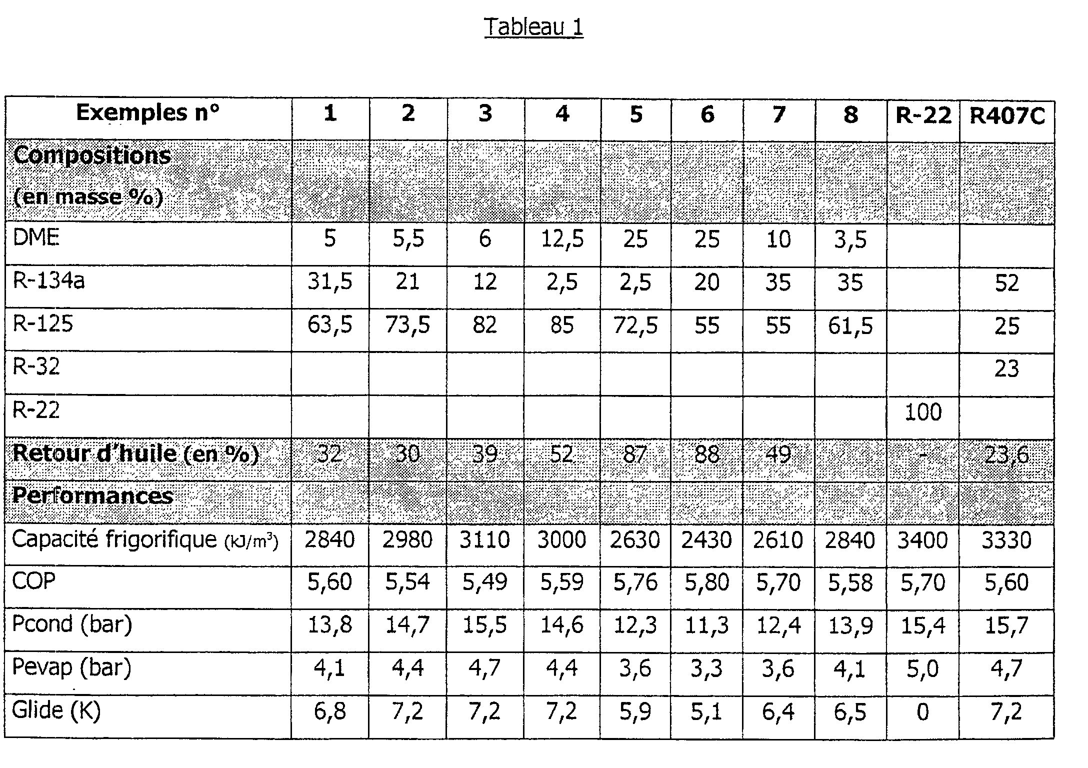

### Exemple 9 : Compatibilité chimique avec les polymères habituellement utilisés avec le R-22 :

La longueur d'éprouvettes de dimensions fixées de ces polymères et leur résistance à la traction (éprouvettes de type H2 selon la norme NFT 46002 de l'Association Française de Normalisation ou AFNOR) sont mesurées avant et après un contact d'une semaine de ces dernières avec la composition de l'exemple n°3 dans une cellule autoclave en inox maintenue à 60°C. Le remplissage en fluide frigorigène de cette cellule est tel que les éprouvettes trempent en totalité dans le liquide.

Les résultats sont indiqués dans le Tableau 2 ci-dessous.

**Tableau 2**

| **Polymère** | **Variation de longueur (en %)** | | **Variation de résistance à la traction (en %)** | |
|---|---|---|---|---|
| | Exemples 3 | R-22 | Exemple 3 | R-22 |
| EPDM | 0 | -0,2 | -4,5 | 0 |
| Hypalon® | 1,5 | 1,6 | -4,8 | -14,9 |
| Néoprène® | -0,8 | -1,5 | 7,2 | -11,9 |
| Viton® | 3 | 2,9 | -16 | -25,9 |
| PA 6/6 | -0,5 | 0,3 | 24,2 | -11,4 |
| PET | -0,1 | -0,5 | -1,2 | -47,5 |
| PTFE | 0,9 | 1,4 | 0,9 | -13,4 |

## Revendications

1. Composition consistant essentiellement de 55 à 94 % en poids de R-125, de 2,5 à 35 % en poids de R-134a et de 3,5 à 25 % en poids de DME.

2. Composition selon la revendication 1, **caractérisée en ce qu'**elle consiste essentiellement de 60 à 85 % en poids de R-125, de 10 à 32 % en poids de R-134a, et de 5 à 8 % en poids de DME

3. Composition selon l'une des revendications 1 ou 2, **caractérisée en ce qu'**elle est choisie dans la liste suivante :
| | | |
|---|---|---|
| - R-125 : 63,5% en poids | R-134a : 31,5% en poids | DME : 5% en poids |
| - R-125 : 73,5% en poids | R-134a : 21% en poids | DME : 5,5% en poids |
| - R-125 : 82% en poids | R-134a : 12% en poids | DME : 6% en poids. |

4. Composition selon l'une des revendications 1 à 3, **caractérisée en ce qu'**elle consiste de 82% en poids de R-125, 12% en poids de R-134a, 6% en poids de DME.

5. Utilisation d'une composition telle que définie dans l'une des revendications 1 à 4 comme fluide frigorifique dans un système de transfert de chaleur adapté au R-22 et comprenant comme lubrifiant une huile minérale ou une huile alkylbenzène.

6. Système de transfert de chaleur adapté au R-22 et comprenant comme fluide frigorigène une composition telle que définie dans l'une des revendications 1 à 4.

7. Système de transfert de chaleur selon la revendication 6, **caractérisé en ce que** le lubrifiant est une huile minérale ou une huile alkylbenzène.

8. Système de conditionnement d'air selon l'une des revendications 6 ou 7.

## Patentansprüche

1. Zusammensetzung, die im Wesentlichen aus 55 bis 94 Gew.-% R-125, 2,5 bis 35 Gew.-% R-134a und 3,5 bis 25 Gew.-% DME besteht.

2. Zusammensetzung nach Anspruch 1, **dadurch gekennzeichnet, dass** sie im Wesentlichen aus 60 bis 85 Gew.-% R-125, 10 bis 32 Gew.-% R-134a und 5 bis 8 Gew.-% DME besteht.

3. Zusammensetzung nach einem der Ansprüche 1 oder 2, **dadurch gekennzeichnet, dass** sie aus der folgenden Liste ausgewählt ist:
| | | |
|---|---|---|
| - R-125: 63,5 Gew.-% | R-134a: 31,5 Gew.-% | DME: 5% Gew.-% |
| - R-125: 73,5 Gew.-% | R-134a: 21 Gew.-% | DME: 5,5 Gew.-% |
| - R-125: 82 Gew.-% | R-134a: 12 Gew.-% | DME: 6 Gew.-%. |

4. Zusammensetzung nach einem der Ansprüche 1 bis 3, **dadurch gekennzeichnet, dass** sie aus 82 Gew.-% R-125, 12 Gew.-% R-134a und 6 Gew.-% DME besteht.

5. Verwendung einer Zusammensetzung nach einem der Ansprüche 1 bis 4 als Kältemittel in einem Wärmeübertragungssystem, das für R-22 geeignet ist und als Schmiermittel ein Mineralöl oder ein Alkylbenzolöl enthält.

6. Wärmeübertragungssystem, das für R-22 geeignet ist und als Kältemittel eine Zusammensetzung nach einem der Ansprüche 1 bis 4 enthält.

7. Wärmeübertragungssystem nach Anspruch 6, **dadurch gekennzeichnet, dass** das Schmiermittel ein Mineralöl oder ein Alkylbenzolöl ist.

8. Klimatisierungssystem nach einem der Ansprüche 6 oder 7.

## Claims

1. Composition consisting essentially of 55 to 94 wt% of R-125, 2.5 to 35 wt% of R-134a and 3.5 to 25 wt% of DME.

2. Composition according to Claim 1, **characterized in that** it essentially consists of 60 to 85 wt% of R-125, 10 to 32 wt% of R-134a, and 5 to 8 wt% of DME.

3. Composition according to either of Claims 1 and 2, **characterized in that** it is chosen from the following list:
| | | |
|---|---|---|
| - R-125 : 63.5 wt% | R-134a : 31.5 wt% | DME : 5 wt% |
| - R-125 : 73.5 wt% | R-134a : 21 wt% | DME : 5.5 wt% |
| - R-125 : 82 wt% | R-134a : 12 wt% | DME : 6 wt%. |

4. Composition according to one of Claims 1 to 3, **characterized in that** it consists of 82 wt% of R-125, 12 wt% of R-134a and 6 wt% of DME.

5. Use of a composition as defined in one of Claims 1 to 4 as a refrigerant in a heat transfer system designed for R-22 and comprising, as lubricant, a mineral oil or an alkylbenzene oil.

6. Heat transfer system designed for R-22 and comprising, as refrigerant, a composition as defined in one of Claims 1 to 4.

7. Heat transfer system according to Claim 6, **characterized in that** the lubricant is a mineral oil or an alkylbenzene oil.

8. Air conditioning system according to either of Claims 6 and 7.
